# EUROPEAN PATENT APPLICATION

(11) **EP 2 642 171 A1**
(43) Date of publication of application: **25.09.2013**
(21) Application number: 12001967.4
(22) Date of filing: 20.03.2012
(51) Int. Cl.: F16L 1/26

(54) **Clamp connector arrangement**

(71) Applicant: Vetco Gray Scandinavia AS, 1302 Sandvika (NO)
(72) Inventor: Nevoy, Geir Terje, 1340 Skui (NO); Staale, Svindland, 2848 Skreia (NO)

(57) **Abstract**

A clamp connector arrangement for connecting and securing an end of a tubular member to an abutting end of another tubular member, comprising:
- a first clamping element (20);
- a second clamping element (30);
- a first trunnion member (24) pivotally mounted to the first clamping element;
- a second trunnion member (34) pivotally mounted to the second clamping element;
- an operating shaft (40) connected to said first and second trunnion members; and
- an actuating unit (50) configured to act on said operating shaft.

The operating shaft is fixed to the first trunnion member and diplaceably connected to the second trunnion member through a non-threaded part (43) of the operating shaft. The actuating unit is configured to pull the operating shaft in the axial direction in order to bring the operating shaft into a pretensioned position while pivoting the clamping elements into engagement with the ends of said tubular members.

## Description

### FIELD OF THE INVENTION AND PRIOR ART

The present invention relates to a clamp connector arrangement according to the preamble of claim 1 for connecting and securing an end of a tubular member to an abutting end of another tubular member.

A clamp connector arrangement according to the preamble of claim 1 is previously known from WO 97/11301 A1. This known clamp connector arrangement is provided with a threaded operating shaft and correspondingly threaded trunnion members. The two arc-shaped clamping elements of this clamp connector arrangement are pivotable towards each other by rotation of the operating shaft about its longitudinal axis in a first direction and pivotable away from each other by rotation of the operating shaft about its longitudinal axis in the opposite direction.

### SUMMARY OF THE INVENTION

The object of the present invention is to provide a clamp connector arrangement of new and favourable design, which in at least some aspect offers an advantage as compared to previously known clamp connector arrangements.

According to the invention, this object is achieved by a clamp connector arrangement having the features defined in claim 1.

The clamp connector arrangement of the present invention comprises:
- a first clamping element, which has a hinged first end and an opposite second end;
- a second clamping element, which has a hinged first end and an opposite second end;
- a first trunnion member pivotally mounted to the first clamping element at said second end thereof;
- a second trunnion member pivotally mounted to the second clamping element at said second end thereof;
- an operating shaft connected to said first and second trunnion members; and
- an actuating unit configured to act on said operating shaft.

The operating shaft has a first end part, which is fixed to the first trunnion member, and a second end part, which is configured for engagement with the actuating unit. The operating shaft is diplaceably connected to the second trunnion member through a non-threaded part of the operating shaft located between said first and second end parts, and the actuating unit is configured to pull the operating shaft in the axial direction in order to bring the operating shaft into a pretensioned position while moving said second ends of the clamping elements towards each other and thereby pivoting the clamping elements into engagement with the ends of said tubular members.

The clamping elements of clamp connector arrangement according to the present invention are pivoted towards each other in order to be clamped to the end parts of two tubular members to be connected to each other by pulling the operating shaft backwards, and are pivoted away from each other in order to be released from the end parts of two tubular members to be disconnected from each other by pushing the operating shaft forwards. With the clamp connector arrangement of the present invention, the operations for clamping the clamping elements to the end parts of two tubular members and for releasing the clamping elements from the end parts of two tubular members can be performed in a quicker manner as compared to a clamp connector arrangement of conventional design with threaded connections between the operating shaft and the trunnion members of the clamping elements.

The threaded connections between the operating shaft and the trunnion members of a clamp connector arrangement of conventional design are subjected to friction and wear and such a conventional clamp connector arrangement can only be closed and opened a limited number of times before the operating shaft and trunnions have to be exchanged for new ones. Due to the lack of such threaded connections, the operating shaft and the trunnions of the clamp connector arrangement of the present invention are subjected to reduced friction and wear, which will increase the useful life of the clamp connector arrangement.

According to an embodiment of the invention, the actuating unit comprises:
- a housing,
- a hydraulically or pneumatically actuated piston, which is slideably received in a piston cavity in the housing, and
- an elongated actuating member, which is fixed to the piston and slideably mounted in the housing, the actuating member extending through the housing and being connected or connectable to the second end part of the operating shaft to thereby allow the operating shaft to be moved in the axial direction when the piston and the actuating member are displaced in relation to the housing.

With such an actuating unit, the operating shaft can be manoeuvred in a simple and efficient manner.

According to another embodiment of the invention, the actuating unit is detachably connectable to the operating shaft. Hereby, the actuating unit does not have to be permanently connected to the operating shaft.

Further advantages as well as advantageous features of the clamp connector arrangement according to the present invention will appear from the dependent claims and the following description.

### BRIEF DESCRIPTION OF THE DRAWINGS

With reference to the appended drawings, a specific description of preferred embodiments of the invention cited as examples follows below.

In the drawings:
- Fig 1: is a schematic illustration of a clamp connector arrangement according to an embodiment of the present invention, as seen in a longitudinal section with the clamping elements in a closed position,
- Fig 2: is a detail enlargement according to the circle II in Fig 1,
- Fig 3: shows the clamp connector arrangement of Fig 1 with the clamping elements in an open position,
- Fig 4: is a detail enlargement according to the circle IV in Fig 3,
- Fig 5: is a perspective view of a locking member included in the clamp connector arrangement of Fig 1,
- Fig 6: is a frontal view of the locking member of Fig 5, and
- Fig 7: is a perspective view of parts included in the clamp connector arrangement of Fig 1 and pipe flanges of two tubular members to be connected to each other by means of the clamp connector arrangement.

### DETAILED DESCRIPTION OF PREFERRED EMBODIMENTS OF THE INVENTION

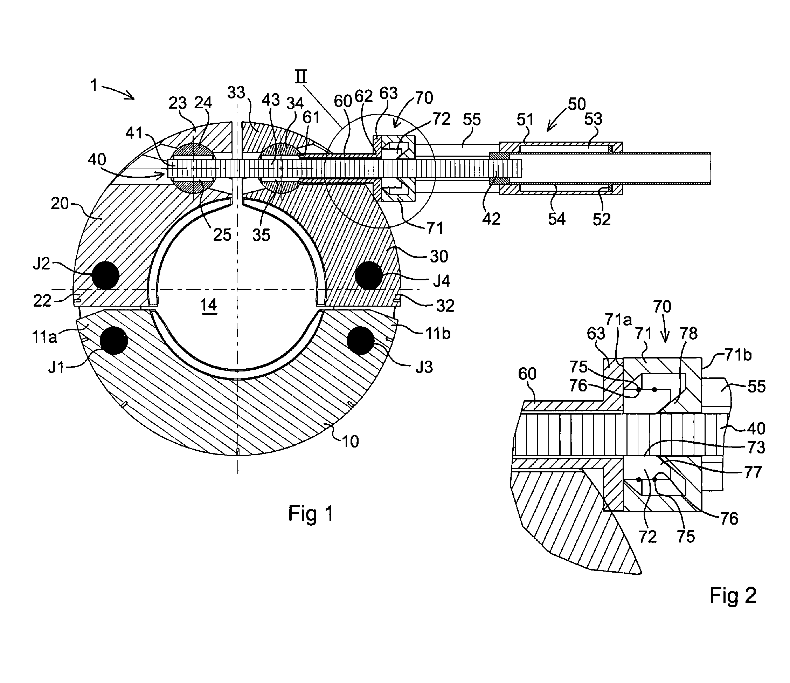

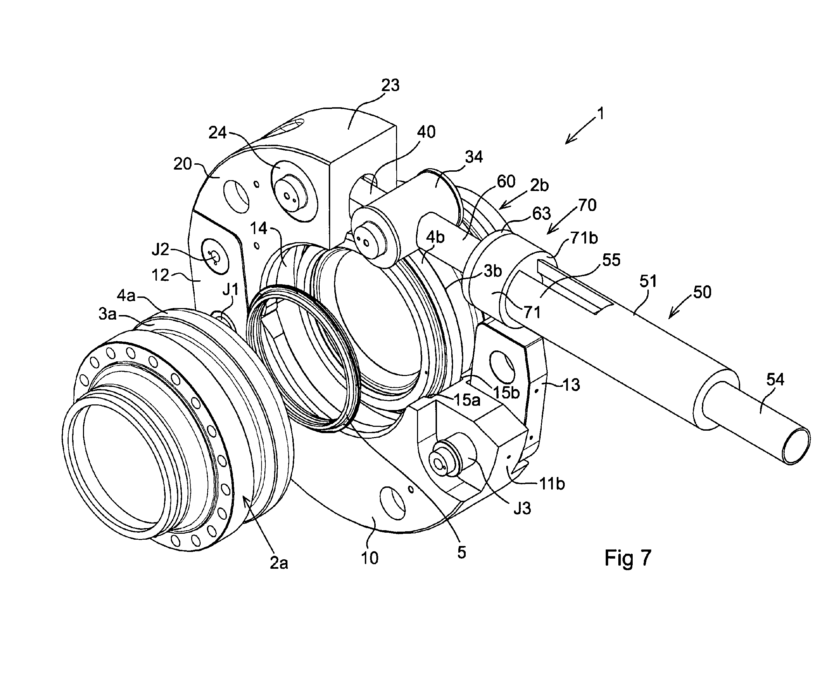

A clamp connector arrangement 1 according to an embodiment of the present invention is illustrated in Figs 1-7. The clamp connector arrangement 1 is to be used for connecting and securing an end 2a (see Fig 7) of a tubular member to an abutting end 2b of another tubular member. The clamp connector arrangement 1 comprises a base part 10, a first clamping element 20 articulately connected to the base part 10 and a second clamping element 30 articulately connected to the base part 10. The second clamping element 30 has been omitted in Fig 7. Each clamping element 20, 30 has a hinged first end 22, 32 and an opposite second end 23, 33. The base part 10 is connected to the first clamping element 20 through a first link 12 provided at a first end 11 a of the base part, and connected to the second clamping element 30 through a second link 13 provided at the opposite second end 11 b of the base part. The first link 12 is at one end articulately connected to the base part 10 through a first joint J1, which forms a first pivot axis, and is at its other end articulately connected to the first clamping element 20 through a second joint J2, which forms a second pivot axis that extends in parallel with said first pivot axis. The second link 13 is at one end articulately connected to the base part 10 through a third joint J3, which forms a third pivot axis that extends in parallel with the above-mentioned first and second pivot axes, and is at its other end articulately connected to the second clamping element 30 through a fourth joint J4, which forms a fourth pivot axis that extends in parallel with the above-mentioned first, second and third pivot axes.

A space 14 for receiving the ends 2a, 2b of two tubular members to be connected to each other is formed between the base part 10 and the clamping elements 20, 30. In the illustrated example, the base part 10 and the clamping elements 20, 30 are arc-shaped.

On the side facing the above-mentioned space 14, the base part 10 has opposed bevelled wedging surfaces 15a, 15b (see Fig 7) for engaging corresponding bevelled wedging surfaces 3a, 3b provided at the abutting ends 2a, 2b of the tubular members to be connected to each other. The respective clamping element 20, 30 has corresponding bevelled wedging surfaces on the side thereof facing the space 14. The wedging surface 3a, 3b of the respective tubular member is for instance provided on a flange 4a, 4b arranged at the end 2a, 2b of the tubular member.

A first trunnion member 24 is pivotally mounted to the first clamping element 20 at the second end 23 thereof, and a second trunnion member 34 is pivotally mounted to the second clamping element 30 at the second end 33 thereof. An operating shaft 40 is connected to these trunnion members 24, 34. The operating shaft 40 has a first end part 41, which is fixed to the first trunnion member 24, and an opposite second end part 42. The operating shaft 40 is diplaceably connected to the second trunnion member 34 through a non-threaded part 43 of the operating shaft located between said first and second end parts 41, 42. This non-threaded part 43 of the operating shaft extends through a through hole 35 provided in the second trunnion member 34 and is slideably received in this through hole 35. In the illustrated example, the first end part 41 of the operating shaft is received in a through hole 25 provided in the first trunnion member 24.

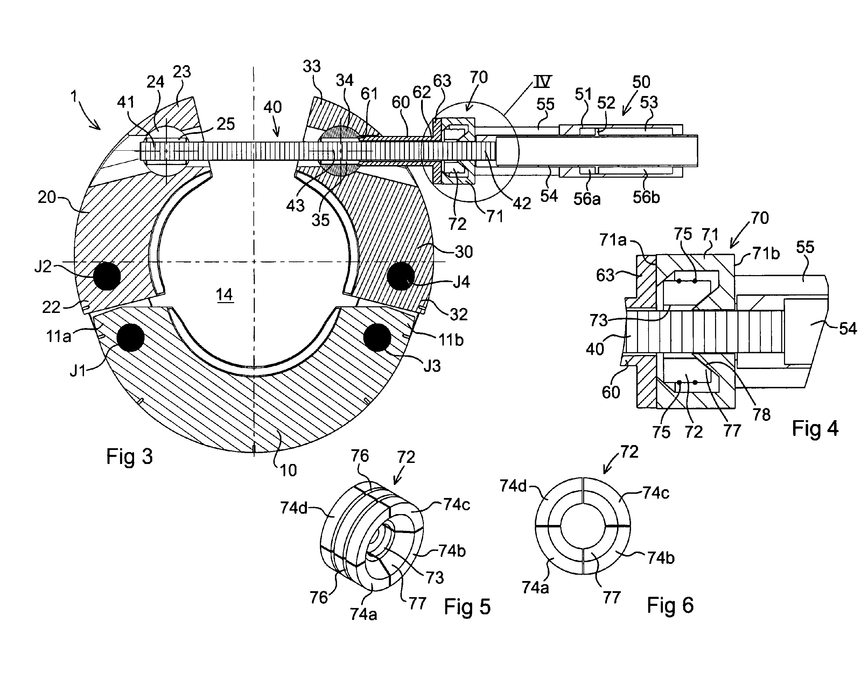

The clamping elements 20, 30 are moveable to and fro between an open position (see Fig 3) and a closed position (see Fig 1) under the effect of an actuating unit 50, which is configured to act on the operating shaft 40. In the closed position, the clamping elements 20, 30 are pivoted towards each other and the wedging surfaces of the base part 10 and the clamping elements 20, 30 are in engagement with the corresponding wedging surfaces 3a, 3b of the tubular members and thereby keep the ends 2a, 2b of the tubular members tightly clamped to each other. A metallic seal member 5 may be provided between the ends 2a, 2b of the tubular members in order to seal the joint formed between the ends of the tubular members. In the open position, the clamping elements 20, 30 are pivoted away from each other and do not exert any clamping action on the ends 2a, 2b of the tubular members.

The actuating unit 50 is connected or connectable to the second end part 42 of the operating shaft and is configured to pull the operating shaft 40 in the axial direction in order to bring the operating shaft into a pretensioned position while moving the second ends 23, 33 of the clamping elements towards each other and thereby pivoting the clamping elements 20, 30 into the above-mentioned closed position. The clamp connector arrangement 1 comprises a locking device 70 for locking the operating shaft 40 in the pretensioned position and thereby locking the clamping elements 20, 30 in the closed position.

A spacer sleeve 60 is connected to the second trunnion member 34 and extends from the second trunnion member 34 on the side thereof facing the second end part 42 of the operating shaft 40. The spacer sleeve 60 has a first end 61 facing the second trunnion member 34 and an opposite second end 62. The operating shaft 40 extends through the spacer sleeve 60 and beyond the ends 61, 62 thereof. The first end 61 of the spacer sleeve is fixed to or bears against the second trunnion member 34. The actuating unit 50 is configured to bear against the spacer sleeve 60, directly or via the locking device 70, when pulling the operating shaft 40 into the pretensioned position. In the illustrated embodiment, the spacer sleeve 60 is provided with a flange 63 at its second end 62, and the actuating unit 50 is configured to bear against this flange 63 via the locking device 70.

In the illustrated embodiment, the locking device 70 comprises a housing 71 and a locking member 72 arranged in the housing 71. A first side 71 a of the housing 71 bears against the flange 63 of the spacer sleeve, whereas an opposite second side 71 b of the housing forms a support surface for the actuating unit 50. The operating shaft 40 extends through the housing 71. In the illustrated example, the locking member 72 has the form of a segmented locking nut which surrounds the operating shaft 40 and is provided with an internal thread 73 configured to engage with a corresponding external thread on the operating shaft 40 when the locking member 72 is in the locking position. The illustrated locking member 72 comprises four segments 74a-d (see Figs 5 and 6), which are kept together by two elastic spring bands 75. The spring bands 75 surrounds the segments 74a-d and are arranged in circumferential grooves 76 formed in the envelop surfaces of the segments.

In the illustrated example, the locking member 72 is provided with an internally cone-shaped section 77, whereas the housing 71 of the locking device is provided with a section 78 that is externally cone-shaped and configured for engagement with said internally cone-shaped section 77 of the locking member. In the locking position illustrated in Fig 2, the locking member 72 bears against the flange 63 of the spacer sleeve 60 and the internal thread 73 of the locking member 72 is in engagement with the corresponding external thread on the operating shaft 40. The locking member 72 thereby prevents the operating shaft 40 from moving axially to the left in Fig 2 and keeps the operating shaft in a pretensioned position. When the clamping elements 20, 30 are to be pivoted from the closed position to the open position, the actuating unit 50 is first made to pull the operating shaft 40 to thereby move the operating shaft 40 and the locking member 72 a short distance axially backwards (to the right in Fig 2). The segments 74a-d of the locking member 72 are then forced radially outwards by the cone-shaped section 78 of the housing, as illustrated in Fig 4. The locking member 72 is hereby expanded radially out of contact with the operating shaft 40 and the operating shaft is free to be displaced axially in the opposite direction from the closed position illustrated in Fig 1 to the open position illustrated in Fig 3.

The actuating unit 50 comprises a housing 51 and a hydraulically or pneumatically actuated piston 52, which is slideably received in a piston cavity 53 in the housing 50. This piston cavity 53 is divided by the piston 52 into a first chamber 56a and a second chamber 56b (see Fig 3). The respective chamber 56a, 56b is connected to a pressure medium system (not shown) for feeding pressure medium in the form of hydraulic oil or compressed air to the chamber in order to control the displacement of the piston 52 in the piston cavity 53. An elongated actuating member 54 is fixed to the piston 52 and slideably mounted in the housing 50. The actuating member 54 extends through the housing 50 and may be tubular or rod-shaped. The actuating member 54 is connected or connectable to the second end part 42 of the operating shaft 40 to thereby allow the operating shaft to be moved in the axial direction when the piston 52 and the actuating member 54 are displaced in relation to the housing 51.

In the illustrated embodiment, the housing 51 of the actuating unit 50 comprises a hollow end part 55, which is intended to face the spacer sleeve 60 when the actuating member 54 is connected to the second end part 42 of the operating shaft. In the illustrated example, said hollow end part 55 is configured to bear against the housing 71 of the locking device 70. The actuating member 54 and the second end part 42 of the operating shaft is displaceably received in the hollow end part 55 of the housing 51 when the actuating member 54 is connected to the second end part 42 of the operating shaft. The actuating member 54 is preferably detachably connected to the second end part 42 of the operating shaft so as to allow the actuating unit 50 to be detached from the operating shaft 40.

The clamp connector arrangement 1 of the present invention is intended for subsea use and is to be operated by means of an ROV (ROV = Remotely Operated Vehicle).

Two tubular members to be connected to each other by means of a clamp connector arrangement 1 of the present invention are positioned end-to-end with opposite ends 2a, 2b of the tubular members received in the space 14 formed between the base part 10 and the clamping elements 20, 30 of the clamp connector arrangement 1. The clamping elements 20, 30 are in the open position (see Fig 3) when the ends 2a, 2b of the tubular members are inserted into said space 14. In order to close the clamp connector arrangement 1, pressure medium is fed into the above-mentioned first chamber 56a in the housing 51 of the actuating unit 50. Hereby, the piston 52 is displaced backwards in the piston cavity 53 and the actuating member 54 will as a consequence pull the operating shaft 40 in the axial direction while pivoting the clamping elements 20, 30 towards each other. During this movement of the operating shaft 40, the locking member 72 is kept in the unlocking position illustrated in Fig 4. When the clamping elements 20, 30 have reached the closed position and the operating shaft 40 has been pretensioned to a desired extent, the locking member 72 is brought into the locking position illustrated in Fig 2 to thereby lock the operating shaft 40 in this pretensioned position. If so desired, the actuating unit 50 may thereafter be disconnected from the operating shaft 40. The tubular members are secured to each other under the effect of the clamping engagement between the wedging surfaces of the clamping elements 20, 30 and the base part 10 and the corresponding wedging surfaces 3a, 3b of the tubular members. When the tubular members are to be disconnected from each other, the above-mentioned operating sequence is executed in the reversed order. When pressure medium is fed into the above-mentioned second chamber 56b in the housing 51 of the actuating unit 50 in order to push the operating shaft 40 forwards, the ROV is made to exert a force on the housing 51 of the actuating unit in order to prevent the housing 51 from being displaced in relation to the spacer sleeve 60 and the housing 71 of the locking device 70.

The invention is of course not in any way restricted to the preferred embodiments described above. On the contrary, many possibilities to modifications thereof will be apparent to a man with ordinary skill in the art without departing from the basic idea of the invention such as defined in the appended claims.

## Claims

1. A clamp connector arrangement for connecting and securing an end of a tubular member to an abutting end of another tubular member, the clamp connector arrangement (1) comprising:
- a first clamping element (20), which has a hinged first end (22) and an opposite second end (23);
- a second clamping element (30), which has a hinged first end (32) and an opposite second end (33);
- a first trunnion member (24) pivotally mounted to the first clamping element (20) at said second end (23) thereof;
- a second trunnion member (34) pivotally mounted to the second clamping element (30) at said second end (33) thereof;
- an operating shaft (40) connected to said first and second trunnion members (24, 34); and
- an actuating unit (50) configured to act on said operating shaft (40),
**characterized in:**
- **that** the operating shaft (40) has a first end part (41), which is fixed to the first trunnion member (24), and a second end part (42), which is configured for engagement with the actuating unit (50);
- **that** the operating shaft (40) is diplaceably connected to the second trunnion member (34) through a non-threaded part (43) of the operating shaft located between said first and second end parts (41, 42); and
- **that** the actuating unit (50) is configured to pull the operating shaft (40) in the axial direction in order to bring the operating shaft into a pretensioned position while moving said second ends (23, 33) of the clamping elements (20, 30) towards each other and thereby pivoting the clamping elements into engagement with the ends of said tubular members.

2. A clamp connector arrangement according to claim 1, **characterized in that** the clamp connector arrangement (1) comprises a locking device (70) for locking the operating shaft (40) in said pretensioned position.

3. A clamp connector arrangement according to claim 2, **characterized in:**
- **that** the clamp connector arrangement (1) comprises a spacer sleeve (60), which is connected to the second trunnion member (34) and extends from the second trunnion member on the side thereof facing the second end part (42) of the operating shaft (40);
- **that** the operating shaft (40) extends through the spacer sleeve (60); and
- **that** the actuating unit (50) is configured to bear against the spacer sleeve (60), directly or via the locking device (70), when pulling the operating shaft (40) into said pretensioned position.

4. A clamp connector arrangement according to claim 3, **characterized in that** the spacer sleeve (60) is provided with a flange (63) at its second end (62), the actuating unit (50) being configured to bear against this flange (63), directly or via the locking device (70), when pulling the operating shaft (40) into said pretensioned position.

5. A clamp connector arrangement according to any of claims 2-4, **characterized in that** the locking device (70) comprises a locking member (72), which is provided with an internal thread (73) configured to engage with a corresponding external thread on the operating shaft (40) when the locking member (72) is in the locking position.

6. A clamp connector arrangement according to any of claims 1-5, **characterized in:**
- **that** the actuating unit (50) comprises:
● a housing (51),
● a hydraulically or pneumatically actuated piston (52), which is slideably received in a piston cavity (53) in the housing (51), and
● an elongated actuating member (54), which is fixed to the piston (52) and slideably mounted in the housing (51), the actuating member (54) extending through the housing (51); and
- **that** the actuating member (54) is connected or connectable to the second end part (42) of the operating shaft (40) to thereby allow the operating shaft to be moved in the axial direction when the piston (52) and the actuating member (54) are displaced in relation to the housing (51).

7. A clamp connector arrangement according to claim 6, **characterized in that** the actuating member (54) is tubular or rod-shaped.

8. A clamp connector arrangement according to claim 6 or 7, **characterized in that** the housing (51) of the actuating unit (50) comprises a hollow end part (55), which is intended to face the spacer sleeve (60) when the actuating member (54) is connected to the second end part (42) of the operating shaft, the actuating member (54) and the second end part (42) of the operating shaft being displaceably received in this hollow end part (55) of the housing when the actuating member (54) is connected to the second end part (42) of the operating shaft.

9. A clamp connector arrangement according to any of claims 1-8, **characterized in that** the actuating unit (50) is detachably connectable to the operating shaft (40).

10. A clamp connector arrangement according to any of claims 1-9, **characterized in that** the first and second clamping elements (20, 30) are arc-shaped.
